# EUROPEAN PATENT APPLICATION

(11) **EP 4 462 500 A1**
(43) Date of publication of application: **13.11.2024**
(21) Application number: 24173753.5
(22) Date of filing: 02.05.2024
(51) Int. Cl.: H01M 4/133, H01M 4/36, H01M 4/587, H01M 10/0525

(54) **ELECTROCHEMICAL DEVICE AND ELECTRONIC DEVICE**

(30) Priority: 05.05.2023 CN 202310494424
(71) Applicant: Ningde Amperex Technology Ltd., Ningde City, Fujian 352100 (CN)
(72) Inventor: TAO, Wei, Ningde City, Fujian Province, People s Republic of China, 352100 (CN); CHEN, Yusheng, Ningde City, Fujian Province, People s Republic of China, 352100 (CN)
(74) Representative: Icosa

(57) **Abstract**

An electrochemical device includes a negative electrode plate. The negative electrode plate includes a negative current collector, a first layer, and a second layer. The first layer is located between the negative current collector and the second layer. The first layer and the second layer both include graphite. A ratio of an intensity of a D peak to an intensity of a G peak in a Raman spectrum of the graphite in the first layer is A, A ranges from 0.05 to 0.3, a ratio of an intensity of a D peak to an intensity of a G peak in a Raman spectrum of the graphite in the second layer is B, B ranges from 0.4 to 0.8, and0.2 ≤ B - A ≤ 0.5.

## Description

### FIELD

This application relates to the field of electrochemical energy storage, and in particular, to an electrochemical device and an electronic device.

### BACKGROUND

With the development of electrochemical energy storage technology, higher requirements have been imposed on the energy density and cycle performance of electrochemical devices (such as a lithium-ion battery). Generally, the energy density and kinetic performance of an electrochemical device can hardly be improved concurrently. The improvement in the charging capability and the charging speed of a negative active material is prone to cause a low gravimetric capacity of the negative active material. Therefore, further improvements in such performance metrics are expected.

### SUMMARY

This application provides an electrochemical device. The electrochemical device includes a negative electrode plate. The negative electrode plate includes a negative current collector, a first layer, and a second layer. The first layer is located between the negative current collector and the second layer. The first layer and the second layer both include graphite. A ratio of an intensity of a D peak to an intensity of a G peak in a Raman spectrum of the graphite in the first layer is A, A ranges from 0.05 to 0.3, a ratio of an intensity of a D peak to an intensity of a G peak in a Raman spectrum of the graphite in the second layer is B, B ranges from 0.4 to 0.8, and 0.2 ≤ B - A ≤ 0.5.

In some embodiments, B ranges from 0.5 to 0.8. In some embodiments, A ranges from 0.05 to 0.2. In some embodiments, 0.3 ≤ B - A ≤ 0.5. In some embodiments, B ranges from 0.4 to 0.7, A ranges from 0.1 to 0.2, and 0.3 ≤ B - A ≤ 0.45. In some embodiments, B ranges from 0.5 to 0.6, A ranges from 0.05 to 0.2, and 0.3 ≤ B - A ≤ 0.5. In some embodiments, a ratio of a thickness of the second layer to a thickness of the first layer ranges from 0.1 to 1. In some embodiments, a ratio of a thickness of the second layer to a thickness of the first layer ranges from 0.1 to 0.67. In some embodiments, a ratio of a thickness of the second layer to a thickness of the first layer ranges from 0.1 to 0.43. In some embodiments, a ratio of a thickness of the second layer to a thickness of the first layer ranges from 0.1 to 0.25. In some embodiments, the graphite includes at least one selected from the group consisting of artificial graphite and natural graphite. In some embodiments, the first layer and the second layer both include the artificial graphite and a binder.

An embodiment of this application further provides an electronic device, including the electrochemical device.

By designing an appropriate ratio the intensity of the D peak to the intensity of the G peak in the Raman spectrum of the graphite in the first layer and the second layer to make the ratios satisfy 0.2 ≤ B - A≤ 0.5, this application improves kinetic performance of the electrochemical device and prevents lithium plating while achieving a high energy density, thereby ensuring relatively high cycle performance of the electrochemical device.

### BRIEF DESCRIPTION OF DRAWING

Figure shows a cross-sectional view of a negative electrode plate sectioned along a width direction according to some embodiments.

### DETAILED DESCRIPTION

The following embodiments enable a person skilled in the art to understand this application more comprehensively, but without limiting this application in any way.

Some embodiments of this application provide an electrochemical device. The electrochemical device includes a negative electrode plate. In some embodiments, the negative electrode plate includes a negative current collector 110, a first layer 111, and a second layer 112. The first layer 111 is located between the negative current collector 110 and the second layer 112. In some embodiments, the first layer 111 and the second layer 112 may exist on one side of the negative current collector 110 (as shown in Figure), or the first layer 111 and the second layer 112 may exist on both sides of the negative current collector 110 (not shown).

In some embodiments, the first layer 111 and the second layer 112 both include graphite. In some embodiments, a ratio of an intensity of a D peak to an intensity of a G peak in a Raman spectrum of the graphite in the first layer 111 is A, and a ratio of an intensity of a D peak to an intensity of a G peak in a Raman spectrum of the graphite in the second layer is B. The ratio of the intensity of the D peak to the intensity of the G peak of the Raman spectrum of the graphite may be used for characterize the degree of crystallinity or the degree of graphitization of the graphite. The lower the ratio, the higher the degree of crystallinity or the degree of graphitization of the graphite, the fewer the defects, and accordingly, the higher the gravimetric capacity of the graphite. In this case, the kinetic performance is relatively low. Conversely, the higher the ratio, the lower the degree of crystallinity or the degree of graphitization of the graphite, the larger the number of defects, and accordingly, the lower the gravimetric capacity of the graphite. In this case, the kinetic performance is relatively high. In the Raman spectrum, the D peak is exhibited at approximately 1350 cm⁻¹, and the G peak is exhibited at approximately 1580 cm⁻¹. The ratio of the intensity of the D peak to the intensity of the G peak is also known as a D-to-G peak intensity ratio. The Raman spectrum of the graphite may be obtained by using an Advantage 532 desktop Raman spectrometer under the following test conditions: the light source is a 532 light source, the sampling depth is 1.5 µm to 2 µm, and the scanning range is 0 to 3500 cm⁻¹.

In some embodiments, A ranges from 0.05 to 0.3, B ranges from 0.4 to 0.8, and 0.2 ≤ B - A ≤ 0.5. Generally, it is difficult to make A be less than 0.05. If the value of A is overly high, the number of defects of the graphite in the first layer 111 is very large. Consequently, the overall kinetic performance of the negative electrode plate is overly high, and the side reactions are violent. If the value of B is overly low, the kinetic performance of the graphite in the second layer 112 is relatively low. Consequently, lithium plating occurs on the surface of the negative electrode plate during cycling, and the cycle performance declines rapidly, thereby leading to inferior cycle performance of the electrochemical device. If the value of B is overly high, the activity of the graphite in the second layer 112 is very high, and the side reactions are intense, thereby leading to inferior cycle performance of the electrochemical device.

In some embodiments, if the value of B -A is overly low, for example, less than 0.2, then the ratio B of the intensity of the D peak to the intensity of the G peak in the Raman spectrum of the graphite in the second layer 112 is not different enough from the ratio A of the intensity of the D peak to the intensity of the G peak of the Raman spectrum of the graphite in the first layer 111, and the effect exerted by the second layer 112 on improving the kinetic performance and cycle performance of the negative electrode plate is not significant. If the value of B-A is overly high, then the ratio A of the intensity of the D peak to the intensity of the G peak in the Raman spectrum of the graphite in the second layer 112 is excessively different from the ratio A of the intensity of the D peak to the intensity of the G peak in the Raman spectrum of the graphite in the first layer 111. In other words, the structural properties of the graphite in the first layer 111 are excessively different from those of the graphite in the second layer 112, thereby being detrimental to the overall structural stability of the first layer 111 and the second layer 112, and being unfavorable to improving the kinetic performance and cycle performance of the negative electrode plate.

In some embodiments, B ranges from 0.5 to 0.8. If the ratio B of the intensity of the D peak to the intensity of the G peak in the Raman spectrum of the graphite in the second layer 112 is overly low, the effect of improving the kinetic performance of the second layer 112 is relatively limited. If the ratio B of the intensity of the D peak to the intensity of the G peak in the Raman spectrum of the graphite in the second layer 112 is overly high, the adverse effect on the energy density of the electrochemical device is relatively high. In some embodiments, when B ranges from 0.5 to 0.8, the second layer 112 exhibits relatively high kinetic performance, and can prevent lithium plating, thereby ensuring superior cycle performance of the electrochemical device and preventing a rapid decline in the cycle performance. On the other hand, if the value of B is overly high, then the kinetic performance of the graphite in the second layer 112 is overly high, and the side reactions of the second layer 112 are violent, thereby reducing the cycle performance of the electrochemical device instead.

In some embodiments, A ranges from 0.05 to 0.2. If the ratio A of the intensity of the D peak to the intensity of the G peak in the Raman spectrum of the graphite in the first layer 111 is overly high, then the adverse effect on the energy density of the electrochemical device is relatively high, and the kinetic performance of the first layer 111 is overly high, so that the side reactions of both the first layer 111 and the second layer 112 are relatively violent. If cost is not taken into account and the manufacturing technique can reach the desired conditions, the lower the ratio A of the intensity of the D peak to the intensity of the G peak in the Raman spectrum of the graphite in the first layer 111, the higher the energy density of the electrochemical device. To obtain the graphite with the ratio A being less than 0.1, the manufacturing process is demanding and costly. In some embodiments, when A ranges from 0.1 to 0.2, the first layer 111 can provide a high energy density, and at the same time, the first layer 111 and the second layer 112 as a whole can still achieve high kinetic performance, thereby ensuring that the electrochemical device achieves superior cycle performance but without resulting in very violent side reactions of the first layer 111 that impair the cycle performance of the electrochemical device.

In some embodiments , 0.3 ≤ B - A ≤ 0.5, thus can improve lithium plating. Furthermore, B ranges from 0.5 to 0.6, A ranges from 0.05 to 0.2, and 0.3 ≤ B - A ≤ 0.5, thus can make volumetric energy density high and capacity retention high.

In some embodiments, B ranges from 0.4 to 0.7, A ranges from 0.1 to 0.2, and 0.3 ≤ B - A ≤ 0.45. In this case, the second layer 112 helps to improve the kinetic performance of the negative electrode plate, and the first layer 111 helps to improve the energy density of the negative electrode plate, thereby ensuring that the electrochemical device achieves a relatively high energy density and superior cycle performance.

In some embodiments, a ratio of a thickness of the second layer 112 to a thickness of the first layer 111 ranges from 0.1 to 1. If the ratio of the thickness of the second layer 112 to the thickness of the first layer 111 is overly low, then the thickness of the second layer 112 may be deficient and unfavorable to the coating process of the second layer 112. If the ratio of the thickness of the second layer 112 to the thickness of the first layer 111 is overly high, then the energy density of the negative electrode plate as a whole is affected adversely. In some embodiments, a ratio of a thickness of the second layer 112 to a thickness of the first layer 111 ranges from 0.1 to 0.67. In this case, the negative electrode plate can achieve a relatively high energy density while still achieving a relatively high level of kinetic performance and cycle performance. In some embodiments, a ratio of a thickness of the second layer 112 to a thickness of the first layer 111 ranges from 0.1 to 0.43, furthermore a ratio of a thickness of the second layer 112 to a thickness of the first layer 111 ranges from 0.1 to 0.25 . This can further optimize the energy density, kinetic performance, and cycle performance of the electrochemical device.

In some embodiments, the graphite in the first layer 111 includes at least one selected from the group consisting of artificial graphite and natural graphite. In some embodiments, the graphite in the second layer 112 includes at least one selected from the group consisting of artificial graphite and natural graphite. In some embodiments, the first layer 111 and the second layer 112 both include the artificial graphite and a binder. In some embodiments, the first layer 111 and the second layer 112 may include a silicon-based material. In some embodiments, the silicon-based material includes at least one of silicon, a silicon-oxygen material, a silicon-carbon material, or a silicon-oxygen-carbon material.

In some embodiments, the negative current collector 110 may be at least one of a copper foil, a nickel foil, or a carbon-based current collector. In some embodiments, the binder in the first layer 111 and the second layer 112 may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, the mass percent of the graphite in the first layer 111 is 90% to 98%. In some embodiments, the mass percent of the graphite in the second layer 112 is 90% to 98%. In some embodiments, the mass ratio between graphite, a binder, and a dispersant in the first layer 111 may be (90 to 98): (1 to 5): (1 to 5). In some embodiments, the mass ratio between graphite, a binder, and a dispersant in the second layer 112 may be (90 to 98): (1 to 5): (1 to 5). Understandably, the mixing ratio of the constituents in the first layer 111 and the second layer 112 is merely an example, and may be any other appropriate mass ratio instead, and the conductive agent is sometimes omissible.

In some embodiments, the electrochemical device may further include a positive electrode plate and a separator. The separator is disposed between the positive electrode plate and the negative electrode plate to serve a separation function.

In some embodiments, the positive electrode plate includes a positive current collector and a positive active material layer. The positive active material layer is located on one side or both sides of the positive current collector. In some embodiments, the positive current collector may be an aluminum foil, or may be another positive current collector commonly used in this field. In some embodiments, the thickness of the positive current collector may be 5 µm to 30 µm.

In some embodiments, the positive active material layer may include a positive active material, a conductive agent, and a binder. In some embodiments, the positive active material may include at least one of lithium cobalt oxide, lithium iron phosphate, lithium aluminum oxide, lithium manganese oxide, or lithium nickel cobalt manganese oxide. In some embodiments, the conductive agent in the positive active material layer may include at least one of conductive carbon black, flake graphite, graphene, or carbon nanotubes. In some embodiments, the binder in the positive active material layer may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, a mass ratio of the positive active material, the conductive agent, and the binder in the positive active material layer is (90 to 99): (0.5 to 5): (0.5 to 5), but this is merely an example, and any other appropriate mass ratio may apply.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, a thickness of the separator falls within a range of approximately 3 µm to 20 µm.

In some embodiments, a surface of the separator may further include a porous layer. The porous layer is disposed on at least one surface of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical device includes, but is not limited to, a lithium-ion battery. In some embodiments, the electrochemical device further includes an electrolyte solution. The electrolyte solution includes at least one of fluoroether, fluoroethylene carbonate, or ether nitrile. In some embodiments, the electrolyte solution further includes a lithium salt. The lithium salt includes lithium bis(fluorosulfonyl)imide and lithium hexafluorophosphate. The concentration of the lithium salt is 1 mol/L to 2 mol/L. In some embodiments, the electrolyte solution may further include a nonaqueous solvent. The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the electrochemical device. The electronic device according to this embodiment of this application is not particularly limited, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household battery, lithium-ion capacitor, or the like.

Some specific embodiments and comparative embodiments are enumerated below to give a clearer description of this application, using a lithium-ion battery as an example.

### Comparative Embodiment 1

Preparing a negative electrode plate: Dissolving artificial graphite as a negative active material, styrene-butadiene rubber as a binder, and sodium carboxymethyl cellulose at a mass ratio of 98: 1: 1 in deionized water to form a first slurry, where the ratio A of the intensity of the D peak to the intensity of the G peak in the Raman spectrum of the artificial graphite in the first slurry is 0.2. Using a 6 µm-thick copper foil as a negative current collector, and coating the negative current collector with the first slurry on both sides to obtain a first layer. Dissolving artificial graphite as a negative active material, styrene-butadiene rubber as a binder, and sodium carboxymethyl cellulose at a mass ratio of 98: 1: 1 in deionized water to form a second slurry, where the ratio B of the intensity of the D peak to the intensity of the G peak in the Raman spectrum of the artificial graphite in the second slurry is 0.8. Applying the second slurry onto the first layer to obtain a second layer. Performing drying, cold-pressing, and slitting to obtain a negative electrode plate.

Preparing a positive electrode plate: Dissolving lithium cobalt oxide as a positive active material, conductive carbon black as a conductive agent, and polyvinylidene difluoride (PVDF) as a binder at a mass ratio of 94.8: 2.8: 2.4 in an N-methyl-pyrrolidone (NMP) solution to form a positive electrode slurry. Using an 8 µm-thick aluminum foil as a positive current collector, and coating the positive current collector with the positive electrode slurry on both sides, each side being coated for a thickness of 80 µm. Performing drying, cold-pressing, and slitting to obtain a positive electrode plate.

Preparing a separator: Using an 8 pm-thick polyethylene (PE) film as a substrate of the separator, coating both sides of the substrate of the separator with a 2-µm thick aluminum oxide ceramic layer, and finally, applying polyvinylidene fluoride (PVDF) as a binder at a concentration of 2.5 mg/1540.25 mm² onto both sides that have been coated with the ceramic layer, and then drying the coating to obtain a separator.

Preparing an electrolyte solution: Mixing, in an environment with a water content of less than 10 ppm, lithium hexafluorophosphate with a nonaqueous organic solvent to form an electrolyte solution in which a lithium salt concentration is 1.15 mol/L, where the nonaqueous organic solvent contains ethylene carbonate (EC), diethyl carbonate (DEC), propylene carbonate (PC), propyl propionate (PP), and vinylene carbonate (VC) mixed at a mass ratio of 20: 30: 20: 28: 2.

Preparing a lithium-ion battery: Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly in an aluminum plastic film that serves as an outer package. Dehydrating the electrode assembly at 80 °C, injecting the electrolyte solution, and performing packaging. Performing steps such as chemical formation, degassing, and shaping to obtain a lithium-ion battery.

Comparative Embodiments 2 to 6 and Embodiments 1 to 13 differ from Comparative Embodiment 1 in the ratio A of the intensity of the D peak to the intensity of the G peak in the Raman spectrum of the graphite in the first layer, the ratio B of the intensity of the D peak to the intensity of the G peak in the Raman spectrum of the graphite in the second layer, and the thickness of the first layer and/or the thickness of the second layer. Other parameters are the same as those in Comparative Embodiment 1, as detailed in Table 1.

In addition, in this application, the corresponding parameters are tested by the following methods.

### Testing the volumetric energy density:

Charging a lithium-ion battery at a current of 3C at 25 °C until the voltage reaches 4.45 V, and then leaving the battery to stand for 30 minutes. Subsequently, discharging the battery at a current of 1C until the voltage drops to 3 V, and then leaving the battery to stand for 10 minutes, thereby completing one cycle. Iterating the foregoing test steps for 1000 cycles, and calculating the volume of the lithium-ion battery as: volume = length × width × thickness, and then calculating the energy density of the lithium-ion battery by using the capacity and volume of the lithium-ion battery.

The capacity of a lithium-ion battery means: The lithium-ion battery is charged at a constant current of 0.5C at 25 °C until a rated voltage, and then charged at a constant voltage until the current drops to 0.02C, and then left to stand for 30 minutes. Subsequently, the lithium-ion battery is discharged at a current of 0.2C until the voltage reaches 3 V. Capacity of the lithium-ion battery = ∫*I* × V*dt,* where V is the instantaneous voltage. Energy density = Capacity of a lithium-ion battery /volume; the lithium-ion battery volume = 5.0 mm × 80 mm × 61 mm.

### Lithium plating test:

Charging a lithium-ion battery at a constant current of 3C or 4C at 25 °C until the voltage increases to a rated voltage of 4.45 V, and then charging the battery at a constant voltage until the current drops to 0.02C. Leaving the battery to stand for 20 minutes, and then disassembling the lithium-ion battery, and observing the anode electrolyte interphase of the fully charged battery to obtain the lithium plating status of the battery charged at 3C or 4C.

### 3C cycle test:

Charging a lithium-ion battery at a constant current of 3C at 25 °C until the voltage increases to a rated voltage of 4.45 V, and then charging the battery at a constant voltage until the current drops to 0.02C. Leaving the battery to stand for 20 minutes, and then discharging the lithium-ion battery at a current of 1C until the voltage drops to 3 V, and recording the actual discharge capacity as D₁, thereby completing one cycle. Iterating the above operations for 1000 cycles, and recording the capacity in each discharge as Dₙ. Calculating the cycle capacity retention rate as: cycle capacity retention rate = (Dₙ/D₁) × 100%.

Table 1 shows parameters and evaluation results in Embodiments 1 to 13 and Comparative Embodiments 1 to 5 separately.

**Table 1**

| | B | Thickness of second layer (µm) | A | Thickness of first layer (µm) | B-A | Thickness ratio between second layer and first layer | Lithium plating of battery charged at 3C | Lithium plating of battery charged at 4C | Volumetric energy density (W·h/L) | Capacity retention rate cycled at 3C |
|---|---|---|---|---|---|---|---|---|---|---|
| Comparative Embodiment 1 | 0.8 | 10 | 0.2 | 40 | 0.6 | 0.25 | No lithium plating | No lithium plating | 700 | 73% |
| Comparative Embodiment 2 | 0.5 | 10 | 0.4 | 40 | 0.1 | 0.25 | No lithium plating | No lithium plating | 708 | 79% |
| Comparative Embodiment 3 | 0.9 | 10 | 0.4 | 40 | 0.5 | 0.25 | No lithium plating | No lithium plating | 700 | 76% |
| Comparative Embodiment 4 | 0.2 | 10 | 0.2 | 40 | 0 | 0.25 | Lithium plating | Lithium plating | 720 | 67% |
| Comparative Embodiment 5 | 0.8 | 10 | 0.5 | 40 | 0.3 | 0.25 | No lithium plating | No lithium plating | 680 | 70% |
| Comparative Embodiment 6 | 0.3 | 10 | 0.2 | 40 | 0.1 | 0.25 | Lithium plating | Lithium plating | 715 | 72% |
| Embodiment 1 | 0.7 | 10 | 0.2 | 40 | 0.5 | 0.25 | No lithium plating | No lithium plating | 710 | 84% |
| Embodiment 2 | 0.8 | 10 | 0.3 | 40 | 0.5 | 0.25 | No lithium plating | No lithium plating | 708 | 83% |
| Embodiment 3 | 0.5 | 10 | 0.05 | 40 | 0.45 | 0.25 | No lithium plating | No lithium plating | 720 | 85% |
| Embodiment 4 | 0.6 | 10 | 0.2 | 40 | 0.4 | 0.25 | No lithium plating | No lithium plating | 715 | 86% |
| Embodiment 5 | 0.7 | 10 | 0.3 | 40 | 0.4 | 0.25 | No lithium plating | No lithium plating | 708 | 88% |
| Embodiment 6 | 0.5 | 10 | 0.1 | 40 | 0.4 | 0.25 | No lithium plating | No lithium plating | 715 | 85% |
| Embodiment 7 | 0.5 | 10 | 0.2 | 40 | 0.3 | 0.25 | No lithium plating | No lithium plating | 712 | 86% |
| Embodiment 8 | 0.6 | 10 | 0.3 | 40 | 0.3 | 0.25 | No lithium plating | No lithium plating | 710 | 87% |
| Embodiment 9 | 0.4 | 10 | 0.2 | 40 | 0.2 | 0.25 | No lithium plating | Slight lithium plating | 720 | 84% |
| Embodiment 10 | 0.5 | 5 | 0.2 | 45 | 0.3 | 0.11 | No lithium plating | No lithium plating | 714 | 85% |
| Embodiment 11 | 0.5 | 15 | 0.2 | 35 | 0.3 | 0.43 | No lithium plating | No lithium plating | 710 | 85% |
| Embodiment 12 | 0.5 | 20 | 0.2 | 30 | 0.3 | 0.67 | No lithium plating | No lithium plating | 706 | 82% |
| Embodiment 13 | 0.5 | 25 | 0.2 | 25 | 0.3 | 1.00 | No lithium plating | No lithium plating | 702 | 80% |

As can be seen from Embodiments 1 to 9 versus Comparative Embodiments 1 to 6, when A ranges from 0.05 to 0.3, B ranges from 0.4 to 0.8, and 0.2 ≤ B - A ≤ 0.5, during charging of the lithium-ion battery at a 3C rate, no lithium plating occurs, the energy density is relatively high, and the cycle capacity retention is improved significantly. When the charging rate is increased to 4C, the negative electrode plate is prone to slight lithium plating in a case that the overall kinetics of the negative electrode are relatively low (Embodiment 9). When the value of B is overly low (Comparative Embodiment 4), lithium plating is prone to occur. When the value of B is overly high (Comparative Embodiment 3), the energy density of the lithium-ion battery is relatively low, and the cycle capacity retention rate is reduced due to a relatively large number of side reactions. When the value of A is overly high (Comparative Embodiment 5), the overall kinetic performance of the negative electrode is overly high, and the side reactions are violent, thereby causing a decline in the cycle capacity retention rate. When the value of B-A is overly high (Comparative Embodiment 1) or overly low (Comparative Embodiment 2), the cycle capacity retention rate of the lithium-ion battery is relatively low.

As can be seen from Embodiment 7 and Embodiments 10 to 13, with the increase of the thickness ratio between the second layer and the first layer, the energy density of the lithium-ion battery shows a tendency to decrease, and the cycle capacity retention rate of the lithium-ion battery shows a tendency to decrease.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

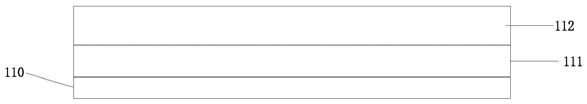

## Claims

1. An electrochemical device, comprising:
a negative electrode plate, wherein the negative electrode plate comprises a negative current collector, a first layer, and a second layer, and the first layer is located between the negative current collector and the second layer; and
the first layer and the second layer both comprise graphite, a ratio of an intensity of a D peak to an intensity of a G peak in a Raman spectrum of the graphite in the first layer is A, A ranges from 0.05 to 0.3; a ratio of an intensity of a D peak to an intensity of a G peak in a Raman spectrum of the graphite in the second layer is B, B ranges from 0.4 to 0.8; and 0.2 ≤ B -A ≤ 0.5.

2. The electrochemical device according to claim 1, wherein B ranges from 0.5 to 0.8.

3. The electrochemical device according to claim 1 or 2, wherein A ranges from 0.05 to 0.2.

4. The electrochemical device according to claim 1 or 3, wherein 0.3 ≤ B - A ≤ 0.5.

5. The electrochemical device according to claim 1, wherein B ranges from 0.4 to 0.7, A ranges from 0.1 to 0.2, and 0.3 ≤ B - A ≤ 0.45.

6. The electrochemical device according to claim 4, wherein B ranges from 0.5 to 0.6.

7. The electrochemical device according to any one of claims 1 to 6, wherein a ratio of a thickness of the second layer to a thickness of the first layer ranges from 0.1 to 1.

8. The electrochemical device according to any one of claims 1 to 6, wherein a ratio of a thickness of the second layer to a thickness of the first layer ranges from 0.1 to 0.67.

9. The electrochemical device according to any one of claims 1 to 6, wherein a ratio of a thickness of the second layer to a thickness of the first layer ranges from 0.1 to 0.43.

10. The electrochemical device according to any one of claims 1 to 6, wherein a ratio of a thickness of the second layer to a thickness of the first layer ranges from 0.1 to 0.25.

11. The electrochemical device according to any one of claims 1 to 6, wherein the graphite comprises at least one selected from the group consisting of artificial graphite and natural graphite.

12. The electrochemical device according to claim 11, wherein the first layer and the second layer both comprise the artificial graphite and a binder.

13. An electronic device, comprising the electrochemical device according to any one of claims 1 to 12.
